(19) Europäisches Patentamt
European Patent Office
Office européen des brevets

(11) **EP 3 406 940 B1**

(12) **EUROPÄISCHE PATENTSCHRIFT**

(45) Veröffentlichungstag und Bekanntmachung des Hinweises auf die Patenterteilung:
**25.11.2020  Patentblatt 2020/48**

(51) Int Cl.:
***F16H 55/22*** *(2006.01)*

(21) Anmeldenummer: **17172629.2**

(22) Anmeldetag: **24.05.2017**

(54) **ZAHNRADPAARUNG FÜR EIN SCHRAUBRADGETRIEBE, SCHRAUBRADGETRIEBE MIT EINER DERARTIGEN ZAHNRADPAARUNG SOWIE VERWENDUNG EINER DERARTIGEN ZAHNRADPAARUNG IN SCHRAUBRADGETRIEBEN**

GEAR PAIR FOR A HELICAL GEAR TRANSMISSION, HELICAL GEAR TRANSMISSION WITH SUCH A GEAR PAIRING AND USE OF SUCH A GEAR PAIR IN SPUR GEAR TRANSMISSIONS

APPARIEMENT DE ROUE DENTÉE POUR UN ENGRENAGE À ROUES-HÉLICES, ENGRENAGE À ROUES-HÉLICES COMPRENANT UN TEL APPARIEMENT DE ROUE DENTÉE ET UTILISATION D'UN TEL APPARIEMENT DANS DES ENGRENAGES À ROUES-HÉLICES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.11.2018  Patentblatt 2018/48**

(73) Patentinhaber: **IMS Gear SE & Co. KGaA**
**78166 Donaueschingen (DE)**

(72) Erfinder:
• **Aberle, Steffen**
 **78126 Königsfeld (DE)**
• **Melinkov, Egor**
 **79822 Titisee-Neustadt (DE)**
• **Schlude, Sebastian**
 **78048 Villingen-Schwenningen (DE)**
• **Koop, Matthias**
 **85375 Neufahrn bei Freising (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
**EP-A1- 3 056 767    DE-A1-102014 211 402**

EP 3 406 940 B1

**Beschreibung**

Die vorliegende Erfindung betrifft eine Zahnradpaarung für ein Schraubradgetriebe, ein Schraubradgetriebe mit einer derartigen Zahnradpaarung sowie die Verwendung einer derartigen Zahnradpaarung in Schraubradgetrieben.

Schraubradgetriebe, welche eine Zahnradpaarung aus einem Schraubrad und einer Schnecke umfassen, weisen eine große Ähnlichkeit mit Schneckengetrieben auf und werden in vielen Anwendungen eingesetzt, insbesondere deshalb, da sich große Übersetzungsverhältnisse auf kleinem Raum realisieren lassen. Aufgrund dieser Eigenschaft werden Schraubradgetriebe in großem Umfang im Automotive-Bereich zur Verstellung von zwei zueinander verstellbaren Fahrzeugteilen eingesetzt. Da sich mit Schraubradgetrieben eine Selbsthemmung realisieren lässt, sind keine weiteren Maßnahmen notwendig, um die einmal eingestellte Position der zwei Fahrzeugteile zueinander festzulegen. Beispiele für Anwendungen von Schraubradgetrieben im Automotive-Bereich sind Sitzlängsverstellungen und Fensterheber.

Das Schraubrad weist dabei einen ersten Verzahnungsabschnitt und die Schnecke einen zweiten Verzahnungsabschnitt auf, die im Schraubradgetriebe kämmend in Eingriff stehen und dabei üblicherweise eine Evolventenverzahnung bilden. Evolventenverzahnungen sind relativ einfach zu fertigen, da sie beispielsweise im Gegensatz zu einer Zykloidenverzahnung mittels eines einfach durchführbaren und effektiven Abwälzverfahrens hergestellt werden können. Zudem sind Evolventenverzahnungen im Vergleich zu einer Zykloidenverzahnung innerhalb von bestimmten Grenzen relativ unempfindlich gegenüber Achsabstandsänderungen und führen zu einem insgesamt ruhigeren Lauf.

Wie bereits angemerkt, haben Schraubradgetriebe sehr große Ähnlichkeiten mit Schneckengetrieben, welche eine Schnecke und ein Schneckenrad umfassen. Während bei Schraubradgetrieben am Schraubrad ein punktförmiger Kontakt mit der Schnecke vorliegt, die bei Belastung zu einer sogenannten Druckellipse wird, liegt bei einem Schneckengetriebe aufgrund der globoiden Form des Verzahnungsabschnitts von Schnecke und/oder Schneckenrad am Schneckenrad eine Linien-berührung vor. Aufgrund der besonderen Formgebung des Verzahnungsabschnitts stellen Schneckengetriebe eine spezielle Ausführungsform von Schraubradgetrieben dar. Folglich gelten die folgenden Aussagen, welche für Schraubradgetriebe getroffen werden, genauso für Schneckengetriebe. Schneckengetriebe sind beispielsweise in der DE 10 2014 211 402 A1 und der EP 3 056 767 A1 offenbart.

Evolventenverzahnungen basieren auf einem Bezugsprofil, welches unter anderem in der DIN 867 genormt ist. Das Bezugsprofil entspricht dem theoretischen Zahnstangenprofil, auf dem das Zahnrad spielfrei abwälzt. In der Praxis ist es die Form des Werkzeugs, mit dem das Zahnrad im Wälzfräsverfahren hergestellt wird. Evolventenverzahnungen, die auf dem in der DIN 867 normierten Bezugsprofil basieren, eignen sich für viele Anwendungen sehr gut, insbesondere dann, wenn die Zahnradpaarung so gestaltet ist, dass eine Materialpaarung Metall-Metall im Eingriff vorliegt.

Unter anderem aus Gründen der vereinfachten Formgebung, des verringerten Gewichts und einer verringerten Geräuschentwicklung werden insbesondere im Automotive-Bereich zunehmend Zahnräder aus Kunststoff eingesetzt, so dass es zu einer Materialpaarung Kunststoff-Kunststoff oder Metall-Kunststoff kommt. Es hat sich herausgestellt, dass sich bekannte Evolventenverzahnungen, die auf dem in der DIN 867 normierten Bezugsprofil basieren, für Materialpaarungen Metall-Kunststoff nur bedingt eignen. Insbesondere aufgrund der höheren Verformbarkeit und der größeren Wärmeausdehnung kann es im Betrieb insbesondere von Schraubradgetrieben zu Fehleingriffen kommen, welche zu einer erhöhten Geräuschentwicklung führen, so dass einer der Vorteile der Verwendung der Materialpaarung Metall-Kunststoff wieder verloren geht. Zudem führen Fehleingriffe zu einem erhöhten Verschleiß, der bei Zahnrädern aus Kunststoff je nach verwendetem Kunststoff stärker voranschreitet als bei Zahnrädern aus Metall. Auch kann ein Verklemmen der miteinander in Eingriff stehenden Zahnräder nicht sicher ausgeschlossen werden, wodurch es zu einem Funktionsausfall des Schraubradgetriebes kommen kann.

Die Anmelderin hat daher eine Evolventenverzahnung entwickelt, die von dem in der DIN 867 beschriebenen Bezugsprofil abweicht und im Folgenden als "Referenzprofil" bezeichnet wird. Dieses Referenzprofil für Schraubradgetriebe, welche eine Zahnradpaarung aus einem Schraubrad und einer Schnecke aufweisen, wird in Serie produziert und ist damit Teil des Stands der Technik. Zwar stellt das Referenzprofil der Anmelderin eine deutliche Verbesserung gegenüber dem normierten Bezugsprofil dar, allerdings können die oben genannten Nachteile mit dem Referenzprofil nicht vollständig beseitigt werden.

Aufgabe der vorliegenden Erfindung ist es daher, eine Zahnradpaarung für ein Schraubradgetriebe anzugeben, mit welcher bei einer Materialpaarung Metall-Kunststoff unter Verwendung einer Evolventenverzahnung die Gefahr von Fehleingriffen zwischen dem Schraubrad und der Schnecke verringert werden kann.

Diese Aufgabe wird mit den in den Ansprüchen 1, 4 und 6 angegebenen Merkmalen gelöst. Vorteilhafte Ausführungsformen sind Gegenstand der Unteransprüche.

Eine Ausführungsform der Erfindung betrifft eine Zahnradpaarung für ein Schraubradgetriebe, umfassend ein Schraubrad mit einem ersten Verzahnungsabschnitt, und eine Schnecke mit einem zweiten Verzahnungsabschnitt, wobei der erste Verzahnungsabschnitt und der zweite Verzahnungsabschnitt kämmend in Eingriff sind und im Eingriff eine Evolventenverzahnung bilden, die Materialien des ersten und des zweiten Verzahnungsabschnitts so gewählt sind, dass sich im Eingriff eine Materialpaarung Metall-Kunststoff ergibt, und der Verzahnungsabschnitt aus Kunststoff eine erste Normalzahndicke und der Verzahnungsabschnitt aus Metall eine zweite Normalzahndicke aufweist, wobei das Verhältnis der ersten Normalzahndicke zur zweiten Normalzahndicke gegenüber einem Referenzprofil um 10 bis 200% und insbesondere um 15 bis 120% erhöht ist.

Das Referenzprofil ist dabei wie folgt definiert:

|  | Schnecke (16) | Schraubrad (10) |
|---|---|---|
| Anzahl der Zähne z | 2 | 13 |
| Steigungs- bzw. Schrägungswinkel $\gamma$, $\beta$ [°] | 12.6608 | 12.6608 |
| Normaleingriffswinkel $\alpha_n$ [°] | 21 | |
| Normalmodul $m_n$ [mm] | 0,98 | 0,98 |
| Teilkreisdurchmesser $d_0$ [mm] | 8,94 | 13,06 |
| Zahnkopfhöhenfaktor $h_a$ | 1,1255 | 0,853 |
| Zahnfußhöhenfaktor $h_f$ | 1,2214 | 1,24 |
| Profilverschiebungsfaktor x | -0,3053 | 0,1647 |
| Normalzahndicke $s_n$ [mm] | 1,3096 | 1,6633 |
| Verhältnis $V_{sn}$ | 0,7874 | |
| Kopfkreisdurchmesser $d_a$ [mm] | 10,550 | 15,052 |
| Fußkreisdurchmesser $d_f$ [mm] | 5,95 | 10,95 |

Um die Materialpaarung Metall-Kunststoff realisieren zu können, müssen das Schraubrad zumindest im ersten Verzahnungsabschnitt aus Metall und die Schnecke zumindest im zweiten Verzahnungsabschnitt aus Kunststoff oder umgekehrt gefertigt sein. Unter einem Verzahnungsabschnitt soll derjenige Abschnitt des betreffenden Zahnrads verstanden werden, in welchem sich die Zähne befinden.

In den meisten Fällen werden das Schraubrad vollständig aus Metall und die Schnecke vollständig aus Kunststoff oder das Schraubrad vollständig aus Kunststoff und die Schnecke vollständig aus Metall gefertigt sein, wobei auch Schnecken oder Schraubräder denkbar sind, bei denen beispielsweise ein Einlegerteil aus Metall vorgesehen ist, welches mit Kunststoff umspritzt ist. Die Materialpaarung Metall-Kunststoff bezieht sich auf die in Eingriff stehenden Verzahnungsabschnitte, so dass an den Berührungspunkten oder Berührungslinien des Schraubrads und der Schnecke Kunststoff mit Metall in Berührung kommt.

Das Referenzprofil definiert eine Evolventenverzahnung und wird später genauer definiert. Die Normalzahndicke beschreibt die Dicke der Zähne auf dem Teilkreis des betreffenden Zahnrads des Verzahnungsabschnitts aus Kunststoff. Dadurch, dass die Normalzahndicke gegenüber dem Referenzprofil um das angegebene Maß vergrößert wird, wird die Verformbarkeit der Zähne des Verzahnungsabschnitts aus Kunststoff reduziert, so dass bei Belastung die Gefahr von Fehleingriffen und die damit einhergehende erhöhte Geräuschentwicklung und der erhöhte Verschleiß reduziert werden.

Die Erhöhung der Normalzahndicke desjenigen Verzahnungsabschnitts aus Kunststoff erfordert eine Anpassung der Normalzahndicke des Verzahnungsabschnitts aus Metall, damit der kämmende Eingriff gewährleistet werden kann. Folglich kann derjenige Verzahnungsabschnitt aus Metall eine Normalzahndicke aufweisen, welche gegenüber dem Referenzprofil entsprechend reduziert ist. Die Normalzahndicke beschreibt in diesem Fall die Dicke der Zähne auf dem Teilkreis des betreffenden Zahnrads des Verzahnungsabschnitts aus Metall. Die Reduzierung der Normalzahndicke führt zu einer Erhöhung der Verformbarkeit der Zähne des Verzahnungsabschnitts aus Metall, so dass sich das Verformungsverhalten des ersten und des zweiten Verzahnungsabschnitts angleichen.

Nach einer weiteren Ausführungsform weist derjenige Verzahnungsabschnitt aus Kunststoff einen Fußkreisdurchmesser auf, welcher gegenüber dem Referenzprofil um 5 bis 40% und insbesondere um 6 bis 20% erhöht ist. Für den Fall, dass der Kopfkreisdurchmesser, der den Durchmesser des betreffenden Zahnrads am radial äußeren Ende des Zahnrads beschreibt, gleich oder nahezu gleich bleibt, wird die Zahnhöhe reduziert, wodurch die Steifigkeit des Bauteils mit dem Verzahnungsabschnitt aus Kunststoff insbesondere dann erhöht wird, wenn das betreffende Bauteil als Welle ausgeführt wird. In diesem Fall wird insbesondere die Steifigkeit zwischen zwei Lagerpunkten erhöht. Infolgedessen wird die Verformung der Zähne bei Belastung reduziert, so dass die Gefahr von Fehleingriffen und die damit einhergehende erhöhte Geräuschentwicklung und der erhöhte Verschleiß reduziert werden.

Bei einer weitergebildeten Ausführungsform kann der Normaleingriffswinkel der Evolventenverzahnung gegenüber dem Referenzprofil um ±5° abweichen und insbesondere zwischen 2 und 4° gegenüber dem Referenzprofil reduziert sein. Der Normaleingriffswinkel des Referenzprofils beträgt 21°. Auch hierdurch wird die Gefahr von Fehleingriffen und insbesondere des Verklemmens reduziert, da der Weg, der beim Abwälzen der Zähne zum Tragen kommt, reduziert wird.

In allen Ausführungsformen werden die genannten Größen so geändert, dass nach wie vor eine Evolventenverzahnung gebildet wird. Die eingangs genannten Vorteile der Evolventenverzahnung, insbesondere der einfachen Fertigung im Abwälzverfahren, bleiben erhalten.

Eine Ausgestaltung der Erfindung betrifft ein Schraubradgetriebe, umfassend eine Zahnradpaarung nach einem der vorherigen Ausführungsformen, wobei das Schraubrad oder die Schnecke mit einer Antriebswelle verbunden sind und der erste Verzahnungsabschnitt des Schraubrads und der zweite Verzahnungsabschnitt der Schnecke kämmend in Eingriff stehen.

Die technischen Effekte und Vorteile, die sich mit dem vorschlagsgemäßen Schraubradgetriebe erreichen lassen, entsprechen denjenigen, die für die vorliegende Zahnradpaarung erörtert worden sind. Zusammenfassend sei darauf hingewiesen, dass es mit dem vorschlagsgemäßen Schraubradgetriebe möglich ist, auf technisch einfache Weise die Gefahr von Fehleingriffen im Betrieb des Schraubradgetriebes zu verringern. Infolgedessen werden die Geräuschentwicklung und der Verschleiß gering gehalten.

In einer weiteren Ausgestaltung kann das Schraubrad aus Metall bestehen, als Spindelmutter ausgebildet sein und mit einer Spindel zusammenwirken und die Schnecke aus Kunststoff bestehen. In dieser Ausgestaltung eignet sich das Schraubradgetriebe besonders zur Verwendung in Sitzlängsverstellungen von Fahrzeugen. Hierzu stützt sich die Spindelmutter auf der drehfest im Fahrzeug montierten Spindel ab. Wird die Spindelmutter gedreht, bewegt sie sich entlang der Längsachse der Spindel. Diese Bewegung wird zur Längsverstellung des betreffenden Sitzes genutzt. Die Ausbildung des als Spindelmutter ausgebildeten Schraubrads aus Metall hat folgenden technischen Effekt: Aufgrund der im Vergleich zu Kunststoff höheren Festigkeit des Metalls kann die Spindelmutter aus Metall höhere Kräfte auf die Spindel übertragen, so dass im Falle eines Crashes des Fahrzeugs die Spindelmutter in Eingriff mit der Spindel bleibt, wodurch ein unkontrolliertes Verschieben des Sitzes verhindert wird. Hierdurch wird die Verletzungsgefahr des auf dem Sitz sitzenden Insassen des Fahrzeugs verringert.

Eine Ausführung der Erfindung betrifft die Verwendung einer Zahnradpaarung nach einem der zuvor erörterten Ausführungsformen in Schraubradgetrieben insbesondere nach einem der zuvor beschriebenen Ausgestaltungen für Hilfsantriebe, insbesondere für Sitzlängsverstellungen, in Fahrzeugen.

Eine andere Ausbildung der Erfindung betrifft eine Zahnradpaarung für ein Schraubradgetriebe, umfassend ein Schraubrad mit einem ersten Verzahnungsabschnitt, und eine Schnecke mit einem zweiten Verzahnungsabschnitt, wobei der erste Verzahnungsabschnitt und der zweite Verzahnungsabschnitt kämmend in Eingriff sind und im Eingriff eine Evolventenverzahnung bilden, die Materialien des ersten und des zweiten Verzahnungsabschnitts so gewählt sind, dass sich im Eingriff eine Materialpaarung Metall-Kunststoff ergibt, wobei derjenige Verzahnungsabschnitt aus Kunststoff einen Fußkreisdurchmesser aufweist, welcher gegenüber einem Referenzprofil um 5 bis 40% und insbesondere um 6 bis 20% erhöht ist.

Eine weitere Umsetzung der Erfindung betrifft eine Zahnradpaarung für ein Schraubradgetriebe, umfassend ein Schraubrad mit einem ersten Verzahnungsabschnitt, und eine Schnecke mit einem zweiten Verzahnungsabschnitt, wobei der erste Verzahnungsabschnitt und der zweite Verzahnungsabschnitt kämmend in Eingriff sind und im Eingriff eine Evolventenverzahnung bilden, die Materialien des ersten und des zweiten Verzahnungsabschnitts so gewählt sind, dass sich im Eingriff eine Materialpaarung Metall-Kunststoff ergibt, und der Normaleingriffswinkel der Evolventenverzahnung gegenüber dem Referenzprofil um $\pm5°$ abweicht und insbesondere zwischen 1 und 4° gegenüber dem Referenzprofil reduziert ist.

Die technischen Effekte und Vorteile, die sich mit dem vorschlagsgemäßen Schraubradgetriebe erreichen lassen, entsprechen denjenigen, die für die vorliegende Zahnradpaarung erörtert worden sind. Zusammenfassend sei darauf hingewiesen, dass es mit der vorschlagsgemäßen Verwendung der zuvor beschriebenen Zahnradpaarung in einem Schraubradgetriebe möglich ist, auf technisch einfache Weise die Gefahr von Fehleingriffen im Betrieb des Schraubradgetriebes zu verringern. Infolgedessen werden die Geräuschentwicklung und der Verschleiß gering gehalten.

Beispielhafte Ausführungsformen der Erfindung werden im Folgenden unter Bezugnahme auf die beigefügten Zeichnungen näher erläutert. Es zeigen

Figur 1    eine Schnittdarstellung durch ein Schraubrad gemäß einer Ausführungsform der Erfindung im Vergleich zu einem auf einem Referenzprofil basierenden Schraubrad,

Figur 2    eine Schnittdarstellung durch eine Schnecke gemäß einer Ausführungsform der Erfindung im Vergleich zu einer auf dem Referenzprofil basierenden Schnecke,

Figur 3    eine vergrößerte Darstellung des in Figur 2 definierten Ausschnitts A der Schnecke, und

Figur 4    eine prinzipielle Darstellung eines Schraubradgetriebes mit einer in Figur 1 dargestellten Schnecke und einem in Figur 2 dargestellten Schraubrad.

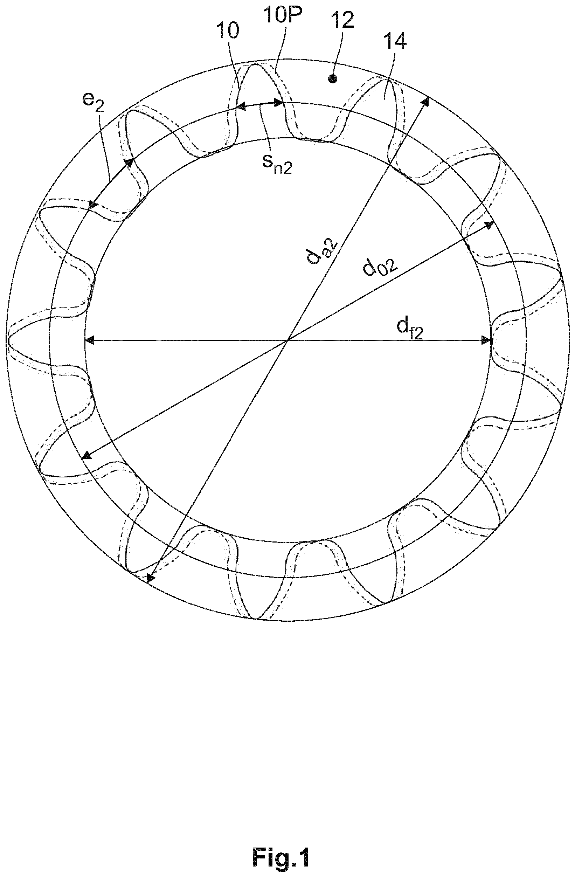

In der Figur 1 ist eine Schnittdarstellung durch ein Schraubrad 10 gemäß einer Ausführungsform der Erfindung im Vergleich zu einem auf einem Referenzprofil basierenden Schraubrad 10P gezeigt. Die durchgezogene Linie kennzeichnet dabei das erfindungsgemäße Schraubrad 10, während die gestrichelte Linie ein Schraubrad 10P zeigt, welches die Anmelderin in Serie produziert.

Das dargestellte Schraubrad 10 ist vollständig aus Metall gefertigt. Das Schraubrad 10 weist einen ersten Verzahnungsabschnitt 12 auf, innerhalb dem sich eine Anzahl von Zähnen 14 befindet. Radial innen wird der erste Verzahnungsabschnitt 12 von einem Fußkreis mit einem Fußkreisdurchmesser $d_{f2}$ begrenzt, während der erste Verzahnungsabschnitt 12 radial nach außen von einem Kopfkreis mit einem Kopfkreisdurchmesser $d_{a2}$ begrenzt wird.

Weiterhin weisen die Zähne 14 des Schraubrads 10 eine Normalzahndicke $s_{n2}$ auf, welche die Dicke der Zähne 14 auf einem Teilkreis mit dem Teilkreisdurchmesser $d_{02}$ des Schraubrads 10 bezeichnet. Der Abstand zwischen zwei benachbarten Flanken der Zähne 14 wird als Lückenweite $e_2$ bezeichnet. Der Index 2 in den oben genannten Größen des Schraubrads 10 deutet darauf hin, dass das Schraubrad aus Metall gefertigt ist.

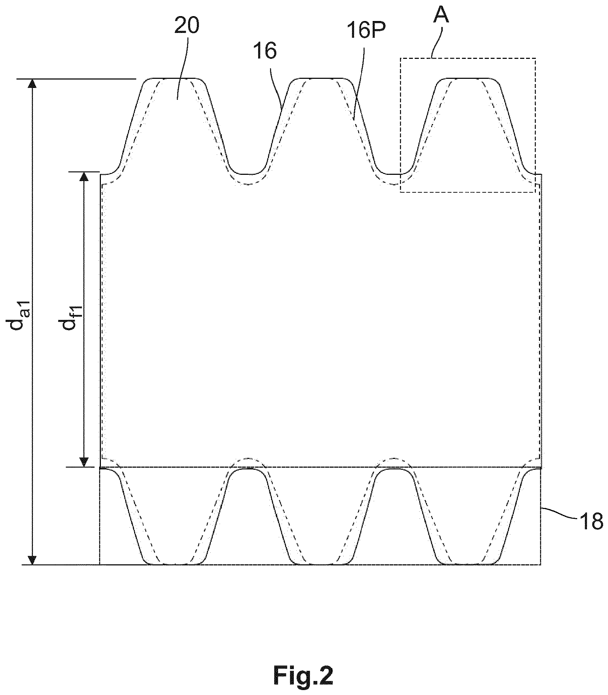

In der Figur 2 ist eine Schnittdarstellung durch eine Schnecke 16 gemäß einer Ausführungsform der Erfindung im Vergleich zu einer auf dem Referenzprofil der Anmelderin basierenden Schnecke 16P gezeigt. Die durchgezogene Linie kennzeichnet dabei die erfindungsgemäße Schnecke 16, während die gestrichelte Linie eine Schnecke 16P zeigt, welche die Anmelderin in Serie produziert.

Die dargestellte Schnecke 16 ist vollständig aus Kunststoff gefertigt. Die Schnecke 16 weist einen zweiten Verzahnungsabschnitt 18 auf, innerhalb dem sich eine Anzahl von Zähnen 20 befindet. Radial innen wird der zweite Verzahnungsabschnitt 18 von einem Fußkreis mit einem Fußkreisdurchmesser $d_{f1}$ begrenzt, während der zweite Verzahnungsabschnitt 18 radial nach außen von einem Kopfkreis mit einem Kopfkreisdurchmesser $d_{a1}$ begrenzt wird. Der Index 1 bei den zuvor genannten Größen deutet darauf hin, dass die Schnecke 16 aus Kunststoff gefertigt ist.

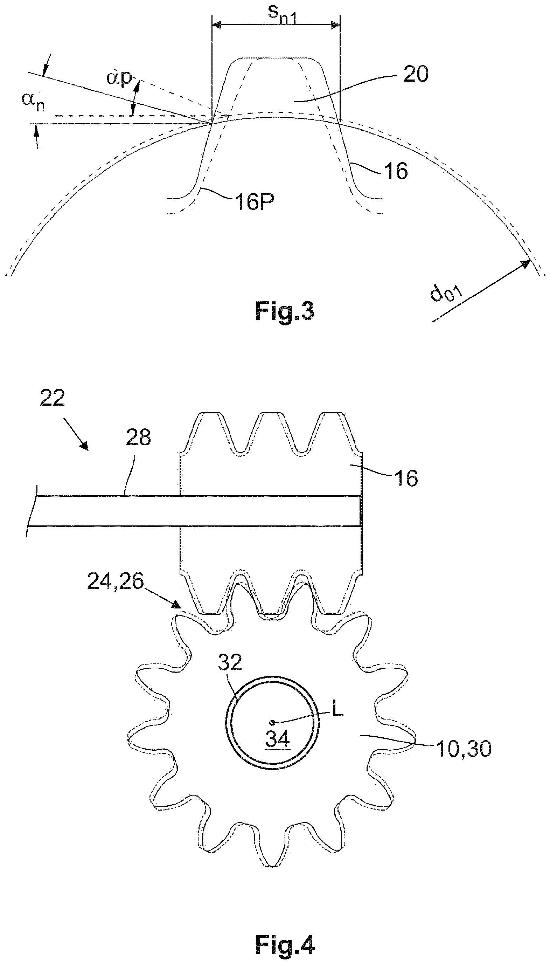

Figur 3 zeigt den in Figur 2 gekennzeichneten Ausschnitt A der Schnecke 16 in vergrößerter Form. Wie aus Figur 3 ersichtlich, weisen die Zähne 20 der Schnecke 16 eine Normalzahndicke $s_{n1}$ auf, welche die Dicke der Zähne 20 auf einem Teilkreis mit dem Durchmesser $d_{01}$ der Schnecke 16 bezeichnet.

In Figur 4 ist ein Schraubradgetriebe 22 anhand einer prinzipiellen Darstellung gezeigt. Das Schraubrad 10 und die Schnecke 16 stehen miteinander in kämmendem Eingriff und bilden zusammen eine Zahnradpaarung 24, die eine Evolventenverzahnung 26 ausbildet. Da das Schraubrad 10 aus Metall und die Schnecke 16 aus Kunststoff bestehen, ergibt sich im Eingriff eine Materialpaarung Metall-Kunststoff.

Die Schnecke 16 ist im dargestellten Beispiel mit einer Antriebswelle 28 verbunden, die von einem nicht dargestellten Motor in Drehung versetzt werden kann. Das Schraubrad 10 ist als eine Spindelmutter 30 ausgebildet, welche ein Innengewinde 32 aufweist. Über das Innengewinde 32 ist die Spindelmutter 30 mit einer Spindel 34 verbunden, wobei die Längsachse L der Spindel 34 senkrecht zur Darstellungsebene der Figur 4 verläuft. Nicht dargestellt ist ein Gehäuse, in welchem die Zahnradpaarung 24 angeordnet ist.

Im dargestellten Beispiel eignet sich das Schraubradgetriebe 22 insbesondere als Sitzlängsverstellung in Fahrzeugen. Die Spindel 34 ist drehfest im Fahrzeug montiert. Wird die Schnecke 16 über die Antriebswelle 28 infolge eines entsprechenden Aktivierens des Motors gedreht, überträgt sich die Drehung der Schnecke 16 mit dem entsprechenden Übersetzungsverhältnis auf die Spindelmutter 30. Infolgedessen bewegen sich die Spindelmutter 30 und das gesamte Schraubradgetriebe 22 entlang der Längsachse L der Spindel 34. Diese Bewegung wird zur Längsverstellung des betreffenden Sitzes genutzt.

Wie erläutert, bildet das Zahnradpaar umfassend die Schnecke 16 und das Schraubrad 10 im Eingriff eine Evolventenverzahnung 26. In Figur 3 ist der Normaleingriffswinkel $\alpha_n$ der vorschlagsgemäßen Evolventenverzahnung 26 dem Normaleingriffswinkel $\alpha P$ des Referenzprofils der Anmelderin gegenübergestellt.

Im Folgenden werden die Beziehungen der wichtigsten Größen bei Evolventenverzahnungen 26 aufgeführt. Die wichtigsten Größen sind:

| | |
|---|---|
| do | Teilkreisdurchmesser (mm) |
| $d_a$ | Kopfkreisdurchmesser (mm) |
| $d_f$ | Fußkreisdurchmesser (mm) |
| e | Lückenweite (mm) |
| h | Zahnhöhe (mm) |
| $h_a$ | Zahnkopfhöhenfaktor |
| $h_f$ | Zahnfußhöhenfaktor |
| $m_n$ | Normalmodul (mm) |
| p | Teilung (mm) |
| $s_n$ | Normalzahndicke (mm) |
| x | Profilverschiebungsfaktor (-) |
| z | Anzahl der Zähne (-) |

$\alpha_n$    Normaleingriffswinkel (°)

$\gamma, \beta$    Steigungs- bzw. Schrägungswinkel (°)

Diese Größen stehen in folgenden Beziehungen zueinander:

Für die Normalzahndicke sn gilt:

$$s_n = m_n * \left(\frac{\pi}{2} + x * \sin \alpha_n\right)$$

Für den Teilkreisdurchmesser do gelten folgende Beziehungen:

$$d_0 = z\frac{m_n}{\cos\beta} = z\frac{m_n}{\sin\gamma}$$

Für den Fußkreisdurchmesser df gelten folgende Beziehungen:

$$d_f = d_0 - 2 * m_n * h_f + 2 * x * m_n$$

Für den Kopfkreisdurchmesser gilt:

$$d_a = d_0 + 2 * m_n * h_a + 2 * x * m_n$$

Für das Normalmodul gilt:

$$m_n = \frac{p}{\pi} = \frac{s + e}{\pi} \approx \frac{2s}{\pi}$$

Zu beachten ist, dass die Lückenweite e und die Normalzahndicke s beim Referenzprofil sowohl beim Verzahnungsabschnitt aus Kunststoff als auch beim Verzahnungsabschnitt aus Metall annähernd gleich groß sind, was aber für die vorschlagsgemäße Evolventenverzahnung 26 nicht gilt. Für die Zahnhöhe h gilt:

$$h = 2{,}25 * m_n$$

Für das Verhältnis Vsn gilt:

$$V_{sn} = \frac{s_{n1}}{s_{n2}}$$

Die folgende Tabelle zeigt eine Gegenüberstellung der wesentlichen Werte der vorschlagsgemäßen Evolventenverzahnung 26 gegenüber dem von der Anmelderin in Serie produzierten und somit bekannten Referenzprofil anhand von zwei Ausführungsbeispielen. Dabei sind die Schnecke 16 aus Kunststoff und das Schraubrad 10 aus Metall gefertigt.

| | Werte gemäß Referenzprofil | | Werte Ausführungsbeispiel 1 | | Werte Ausführungsbeispiel 2 | |
|---|---|---|---|---|---|---|
| | Schnecke | Rad | Schnecke | Rad | Schnecke | Rad |
| Anzahl der Zähne z | 2 | 13 | 2 | 13 | 3 | 20 |
| Steigungs- bzw. Schrägungswinkel $\gamma, \beta$ [°] | 12.6608 | 12.6608 | 12.9000 | 12.9000 | 11.8500 | 11.8500 |
| **Normaleingriffswinkel** $\alpha_n$ **[°]** | **21.0000** | | **20.0000** | | **17.0000** | |
| Normalmodul $m_n$ [mm] | 0.9800 | | 0.9868 | | 0.6278 | |
| Teilkreisdurchmesser $d_0$ [mm] | 8.94 | 13.06 | 8.84 | 13.16 | 9.17 | 12.83 |
| Zahnkopfhöhenfaktor $h_a$ | 1.1255 | 0.8530 | 0.4927 | 1.4728 | 1.3465 | 1.3900 |
| Zahnfußhöhenfaktor $h_f$ | 1.2214 | 1.2400 | 1.6177 | 0.6401 | 1.5100 | 1.4665 |
| Profilverschiebungsfaktor x | −0.3053 | 0.1647 | 0.3736 | −0.5155 | −0.1839 | −0.0461 |
| Normalzahndicke $s_n$ [mm] | 1.3096 | 1.6633 | 1.8184 | 1.1798 | 0.9156 | 0.9684 |
| **Verhältnis** $V_{sn}$ | **0,7874** | | **1,5413** | | **0,9455** | |
| Kopfkreisdurchmesser $d_a$ [mm] | 10.550 | 15.052 | 10.550 | 15.050 | 10.631 | 14.517 |
| **Fußkreisdurchmesser** $d_f$ **[mm]** | **5.950** | **10.950** | **6.385** | **10.880** | **7.045** | **10.930** |

Der Normaleingriffswinkel $\alpha_n$, die Normalzahndicke $s_n$ und der Fußkreisdurchmesser $d_f$ sind diejenigen Größen der vorschlagsgemäßen Evolventenverzahnung, die gezielt verändert werden. Diese Größen sind in der Tabelle schraffiert hinterlegt. Die übrigen in der Tabelle angegebenen Werte verändern sich aufgrund des formelmäßigen Zusammenhangs zwischen den verschiedenen Größen.

Bezugszeichenliste

| | |
|---|---|
| 10 | Schraubrad |
| 10P | bekanntes Schraubrad |
| 12 | erster Verzahnungsabschnitt |
| 14 | Zähne |
| 16 | Schnecke |
| 16P | bekannte Schnecke |
| 18 | zweiter Verzahnungsabschnitt |
| 20 | Zähne |
| 22 | Schraubradgetriebe |
| 24 | Zahnradpaarung |

| | |
|---|---|
| 26 | Evolventenverzahnung |
| 28 | Antriebswelle |
| 30 | Spindelmutter |
| 32 | Innengewinde |
| 34 | Spindel |
| A | Ausschnitt |
| $d_0$ | Teilkreisdurchmesser |
| $d_a$ | Kopfkreisdurchmesser |
| $d_f$ | Fußkreisdurchmesser |
| e | Lückenweite |
| h | Zahnhöhe |
| $h_a$ | Zahnkopfhöhenfaktor |
| $h_f$ | Zahnfußhöhenfaktor |
| L | Längsachse Spindel |
| $m_n$ | Normalmodul |
| p | Teilung |
| $s_n$ | Normalzahndicke |
| $V_{sn}$ | Verhältnis $s_{n1}$ zu $s_{n2}$ |
| x | Profilverschiebungsfaktor |
| z | Anzahl der Zähne |
| $\alpha_n$ | Normaleingriffswinkel |
| $\alpha P$ | bekannter Normaleingriffswinkel |
| $\beta, \gamma$ | Steigungs- bzw. Schrägungswinkel |

**Patentansprüche**

1. Zahnradpaarung für ein Schraubradgetriebe, umfassend

   - ein Schraubrad (10) mit einem ersten Verzahnungsabschnitt (12), und
   - eine Schnecke (16) mit einem zweiten Verzahnungsabschnitt (18), wobei
   - der erste Verzahnungsabschnitt (12) und der zweite Verzahnungsabschnitt (18) kämmend in Eingriff sind und im Eingriff eine Evolventenverzahnung (26) bilden,
   - die Materialien des ersten und des zweiten Verzahnungsabschnitts (12, 18) so gewählt sind, dass sich im Eingriff eine Materialpaarung Metall-Kunststoff ergibt, und
   - der Verzahnungsabschnitt (12, 18) aus Kunststoff eine erste Normalzahndicke ($s_{n1}$) und der Verzahnungsabschnitt (12, 18) aus Metall eine zweite Normalzahndicke ($s_{n2}$) aufweist, **dadurch gekennzeichnet, dass** das Verhältnis ($V_{sn}$) der ersten Normalzahndicke ($s_{n1}$) zur zweiten Normalzahndicke ($s_{n2}$) gegenüber einem Referenzprofil um 10 bis 200% und insbesondere um 15 bis 120% erhöht ist, wobei das Referenzprofil wie folgt definiert ist:

| | Schnecke (16) | Schraubrad (10) |
|---|---|---|
| Anzahl der Zähne z | 2 | 13 |
| Steigungs-bzw. Schrägungswinkel $\gamma$, $\beta$ [°] | 12.6608 | 12.6608 |
| Normaleingriffswinkel $\alpha_n$ [°] | 21 | |
| Normalmodul $m_n$ [mm] | 0,98 | |
| Teilkreisdurchmesser $d_0$ [mm] | 8,94 | 13,06 |
| Zahnkopfhöhenfaktor $h_a$ | 1,1255 | 0,853 |
| Zahnfußhöhenfaktor $h_f$ | 1,2214 | 1,24 |
| Profilverschiebungsfaktor x | -0,3053 | 0,1647 |
| Normalzahndicke $s_n$ [mm] | 1,3096 | 1,6633 |
| Verhältnis $V_{sn}$ | 0,7874 | |
| Kopfkreisdurchmesser $d_a$ [mm] | 10,550 | 15,052 |
| Fußkreisdurchmesser $d_f$ [mm] | 5,95 | 10,95 |

**2.** Zahnradpaarung nach Anspruch 1,
**dadurch gekennzeichnet, dass** derjenige Verzahnungsabschnitt (12, 18) aus Kunststoff einen Fußkreisdurchmesser ($d_f$) aufweist, welcher gegenüber dem Referenzprofil um 5 bis 40% und insbesondere um 6 bis 20% erhöht ist.

**3.** Zahnradpaarung nach einem der vorherigen Ansprüche,
**dadurch gekennzeichnet, dass** der Normaleingriffswinkel ($\alpha_n$) der Evolventenverzahnung (26) gegenüber dem Referenzprofil um $\pm5°$ abweicht und insbesondere zwischen 1 und 4° gegenüber dem Referenzprofil reduziert ist.

**4.** Schraubradgetriebe, umfassend eine Zahnradpaarung (24) nach einem der vorherigen Ansprüche, wobei das Schraubrad (10) oder die Schnecke (16) mit einer Antriebswelle verbunden sind und der erste Verzahnungsabschnitt (12) des Schraubrads und der zweite Verzahnungsabschnitt (18) der Schnecke (16) kämmend in Eingriff stehen.

**5.** Schraubradgetriebe nach Anspruch 4,
**dadurch gekennzeichnet, dass** das Schraubrad (10) aus Metall besteht, als Spindelmutter (30) ausgebildet ist und mit einer Spindel (34) zusammenwirkt und die Schnecke (16) aus Kunststoff besteht.

**6.** Verwendung einer Zahnradpaarung (24) nach einem der Ansprüche 1 bis 3 in Schraubradgetrieben insbesondere nach einem der Ansprüche 4 oder 5 für Sitzlängsverstellungen in Fahrzeugen.

**Claims**

**1.** Gearwheel pairing for a helical gearing, comprising

- a helical gear (10) with a first toothing segment (12), and
- a worm (16) with a second toothing segment (18), wherein
- the first toothing segment (12) and the second toothing segment (18) can be brought into intermeshing and form an involute toothing (26) when intermeshed,
- the materials of the first and the second toothing segments (12, 18) are chosen such that when intermeshed there results a plastic-metal material pairing, and
- the toothing segment (12, 18) made of plastic has a first normal tooth thickness ($s_{n1}$) and the toothing segment (12, 18) made of metal has a second normal tooth thickness ($s_{n2}$),
**characterized in that** the ratio ($V_{sn}$) of the first normal tooth thickness ($s_{n1}$) to the second normal tooth thickness ($s_{n2}$) is increased by 10 to 200% and especially by 15 to 120% with respect to a reference profile, wherein the reference profile is defined as follows:

|  | Worm (16) | Helical gear (10) |
|---|---|---|
| Number of teeth z | 2 | 13 |
| Pitch angle or helix angle $\gamma$, $\beta$ [°] | 12.6608 | 12.6608 |
| Normal meshing angle $\alpha_n$ [°] | 21 | |
| Normal modulus $m_n$ [mm] | 0, 98 | |
| Pitch circle diameter $d_0$ [mm] | 8, 94 | 13,06 |
| Tooth tip height factor $h_a$ | 1,1255 | 0,8530 |
| Tooth root height factor $h_f$ | 1,2214 | 1,24 |
| Profile shift coefficient x | -0,3053 | 0,1647 |
| Normal tooth thickness $s_n$ [mm] | 1,3096 | 1,6633 |
| Ratio $V_{sn}$ | 0,7874 | |
| Tip circle diameter $d_a$ [mm] | 10,550 | 15,052 |
| Root circle diameter $d_f$ [mm] | 5,950 | 10,95 |

**2.** Gearwheel pairing as claimed in claim 1,
**characterized in that** the toothing segment (12, 18) made of plastic has a root circle diameter (df) which is increased by 5 to 40% and especially by 6 to 20% with respect to a reference profile.

3. Gearwheel pairing as claimed in one of the preceding claims, **characterized in that** the normal meshing angle (an) of the involute toothing (26) differs by $\pm 5°$ from the reference profile and in particular is reduced by 1 to 4° relative to the reference profile.

4. Helical gearing, comprising a gearwheel pairing (24) as claimed in one of the preceding claims, wherein the helical gear (10) or the worm (16) are connected to a drive shaft and the first toothing segment (12) of the helical gear and the second toothing segment (18) of the worm (16) are intermeshed.

5. Helical gearing as claimed in claim 4,
   **characterized in that** the helical gear (10) consists of metal, is formed as a spindle nut (30) and interacts with a spindle (34) and the worm (16) consists of plastic.

6. Use of a gearwheel pairing (24) as claimed in one of claims 1 to 3 in helical gearings, especially as claimed in one of claims 4 or 5 for seat length adjustments in vehicles.

## Revendications

1. Appariement de roues dentées pour un engrenage à vis comprenant :

   - une roue à dents hélicoïdales (10) ayant un premier segment denté (12), et
   - une vis sans fin (16) ayant un second segment denté (18),
   - le premier segment denté (12) et le second segment denté (18) étant engrenés et formant en prise, une denture en développante (26),
   - les matières du premier et du second segment (12, 18) sont choisies pour avoir en prise, un appariement métal-matière synthétique, et
   - le segment denté (12, 18) en matière synthétique ayant une première épaisseur normale de dent ($s_{n1}$) et le segment denté (12, 18) en métal ayant une seconde épaisseur normale de dent ($s_{n2}$),
   **caractérisé en ce que**
   le rapport ($V_{sn}$) de la première épaisseur normale de dent ($s_{n1}$) à la seconde épaisseur normale de dent ($s_{n2}$) est augmenté de 10 à 200% par rapport à un profil de référence et en particulier de 15 à 120%, le profil de référence étant défini comme suit :

|  | Vis (16) | Roue à vis (10) |
|---|---|---|
| nombre de dents z | 2 | 13 |
| Inclinaison ou angle d'hélice $\gamma$, $\beta$ [°] | 12.6608 | 12.6608 |
| angle de pression normal $\alpha_n$ [°] | | 21 |
| module normal $m_n$ [mm] | | 0,98 |
| diamètre du cercle primitif $d_0$ [m] | 8,94 | 13,06 |
| coefficient de hauteur de tête de dent $h_a$ | 1,1255 | 0,853 |
| coefficient de hauteur de pied de dent $h_r$ | 1,2214 | 1,24 |
| coefficient de déport du profil x | - 0,3053 | 0,1647 |
| épaisseur normale de dent $s_n$ [mm] | 1,3096 | 1,6633 |
| rapport $V_{sn}$ | | 0,7874 |
| diamètre du cercle de tête $d_a$ [mm] | 10,550 | 15,052 |
| diamètre du cercle de pied $d_f$ [mm] | 5,95 | 10,95 |

2. Appariement de roues dentées selon la revendication 1, **caractérisé en ce que** le segment denté (12, 18) en matière synthétique a un diamètre de cercle de pied ($d_f$) augmenté de 5 à 40% et en particulier de 6 à 20% par rapport au profil de référence.

3. Appariement de roues dentées selon l'une des revendications précédentes,
   **caractérisé en ce que**
   l'angle normal d'engrènement ($\alpha_n$) de la denture en développante (26) diffère de $\pm 5°$ et en particulier il est réduit de 1° et 4° par rapport au profil de référence.

**4.** Engrenage à roue à vis comprenant un appariement de roues dentées (24) selon l'une des revendications précédentes,
la roue à vis (10) ou la vis (16) étant reliées à un arbre d'entraînement et le premier segment denté (12) de la roue à vis et le second segment denté (18) de la vis (16) étant en prise par engrènement.

**5.** Appariement de roues dentées selon la revendication 4,
**caractérisé en ce que**
la roue à vis (10) est réalisée en métal, comme écrou de broche (30) et elle coopère avec une broche (34), la vis (16) étant en matière synthétique.

**6.** Application d'un appariement de roues dentées (24) selon l'une des revendications 1 à 3 à des engrenages à vis, notamment selon l'une des revendications 4 ou 5 pour le réglage longitudinal d'un siège de véhicule automobile.

**Fig.1**

**Fig.2**

**Fig.3**

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014211402 A1
- EP 3056767 A1